Europäisches Patentamt

European Patent Office

Office européen des brevets

(19)

(11) EP 0 872 940 A2

## (12) EUROPÄISCHE PATENTANMELDUNG

(43) Veröffentlichungstag:
21.10.1998 Patentblatt 1998/43

(51) Int. Cl.$^6$: H02J 1/00

(21) Anmeldenummer: 98106136.9

(22) Anmeldetag: 03.04.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 15.04.1997 DE 19715571

(71) Anmelder:
TEMIC TELEFUNKEN microelectronic GmbH
74072 Heilbronn (DE)

(72) Erfinder:
• Baur, Richard
85276 Pfaffenhofen (DE)
• Fendt, Günter
86529 Schrobenhausen (DE)
• Steinberger, Johann
86529 Schrobenhausen (DE)
• Wöhrl, Alfons
86529 Schrobenhausen (DE)

(74) Vertreter:
Maute, Hans-Jürgen, Dipl.-Ing.
Daimler-Benz Aktiengesellschaft,
FTP/H,
Postfach 35 35
74025 Heilbronn (DE)

(54) Verfahren zum Betreiben eines Energieversorgungsgeräts und Energieversorungsgerät

(57) Ein Verfahren zum Betreiben eines Energieversorgungsgeräts, welches zur Versorgung mindestens einer elektronischen Baugruppe mit einer Betriebsspannung geeignet ist, ist dadurch gekennzeichnet, daß die vom Energieversorgungsgerät gelieferte Betriebsspannung derart geregelt oder eingestellt wird, daß mindestens eine elektronische Baugruppe mit einer ausreichenden, möglichst kleinen Betriebsspannung versorgt wird. Dadurch kann Migration verringert oder verhindert werden.

FIG. 1

EP 0 872 940 A2

**Beschreibung**

Die Erfindung betrifft ein Verfahren zum Betreiben eines Energieversorgungsgeräts, welches zur Versorgung mindestens einer elektronischen Baugruppe mit einer Betriebsspannung geeignet ist.

Bei Geräten der Kraftfahrzeugelektronik, insbesondere bei Steuergeräten für Airbags geht die Entwicklung in Richtung von noch mehr Endstufen (20 Endstufen und mehr), die verschiedene Aufgaben erfüllen, und beispielsweise zum Zünden einer pyrotechnischen Gasentwicklerladung eines Airbags bestimmt sind. Da die dadurch immer größer werdende Anzahl von Gerätevarianten, je nach Fahrzeugausstattung, einen erheblichen logistischen Aufwand sowie die Lagerung zahlreicher Ersatzteilgerätevarianten bedeuten würde, ist es wünschenswert, dezentrale Bus-Systeme, bestehend aus einem Standard-Zentralgerät ohne Endstufen und entsprechend erforderlichen dezentralen Universal-Endstufen zu realisieren, die von dem Zentralgerät angesteuert werden. Hierbei Werden z.B. die Endstufen zur Ansteuerung der Zündpille des Gasgenerators direkt am Ort des Gasgenerators oder im Gasgenerator plaziert. Im Zentralgerät werden dann nur noch die Einrichtungen für die Aufnahme der einen Zusammenstoß anzeigenden Signale (Crashsignal) und zur Verarbeitung dieser Signale sowie Peripherie-Schnittstellen zur Verbindung mit der Umgebung benötigt. Dies hat den Vorteil, daß nur ein einziges universell verwendbares Zentral-Steuergerät auf Lager gehalten werden muß. Beim Einbau in ein Fahrzeug wird dann ein derartiges Steuergerät mit der Anzahl der benötigten Endstufen kombiniert und entsprechend programmiert.

In dem zentralen Steuergerät soll jedoch unabhängig von der tatsächlichen Ausbaustufe, für die das Gerät schließlich verwendet wird, die für einen Maximalausbau (maximale mögliche Anzahl der anschließbaren Endstufen) benötigte Energie gespeichert werden können. Das ist diejenige Energie, die nach einem Unfall, bei dem man unterstellt, daß die elektrische Verbindung zur Kraftfahrzeugbatterie unterbrochen wird, noch für eine gewisse Zeit die Funktionsfähigkeit des Systems aufrecht erhalten muß. Im Bereich der Endstufen kann nicht die gesamte für die Autarkiezeit des Systems erforderliche elektrische Energie zum Betrieb der jeweiligen Endstufe gespeichert werden, weil das Volumen für die Endstufe im Gasgenerator normalerweise zu klein ist, um die Energie in einem Kondensator der Endstufe zu speichern.

Kondensatoren, insbesondere Elektrolyt-Kondensatoren unterliegen erheblichen Toleranzen hinsichtlich der Kapazität. Durch Alterung und infolge von Temperatureinflüssen, insbesondere bei niedrigen Temperaturen, nimmt die tatsächliche Kapazität gegenüber der Nennkapazität des Kondensators weiter ab. In solchen Fällen ist es üblich, bei vorgegebener Betriebsspannung die Nennkapazität des Kondensators so groß zu wählen, daß auch im schlechtesten anzunehmenden Fall die Funktion der Schaltung, in der sich der Kondensator befindet, gewährleistet werden kann. Bei diesem schlechtesten anzunehmenden Fall beträgt beispielsweise die tatsächlich zur Verfügung stehende Kapazität des Kondensators nur etwa 50% der Nennkapazität. Es sei angenommen, daß mehrere Endstufen mit jeweils einem Kondensator an einem Zentralgerät angeschlossen sind und von diesem mit elektrischer Energie versorgt werden; deshalb wird das Zentralgerät nachfolgend auch als Energieversorgungsgerät bezeichnet. Der genannte schlechteste Kondensator wird dann mit einem für den Betrieb der elektronischen Baugruppe, für die er vorgesehen ist, gerade ausreichenden Spannung versorgt. Dagegen wird bei solchen elektronischen Baugruppen oder Endstufen, deren Kondensator in seiner Kapazität dem Nennwert entspricht, in diesem Kondensator mehr Energie gespeichert als unbedingt nötig ist, denn auch diese anderen Kondensatoren werden mit der gleichen Betriebsspannung versorgt. Wenn nun in einem System mit einem Energieversorgungsgerät und mehreren Endstufen oder allgemeiner elektronischen Baugruppen, die von diesem mit elektrischer Energie versorgt werden, keiner der Elektrolyt-Kondensatoren gegenüber der Nennkapazität merklich abweicht, so wird in allen diesen Kondensatoren mehr elektrische Energie gespeichert als für die Funktion nötig. Und dies deshalb, weil die Kondensatoren und somit die gesamte Schaltung mit einer Betriebsspannung versorgt werden, die höher ist als die zur Speicherung der benötigten Energie im Kondensator erforderliche Spannung (gespeicherte Energie $E = 0,5\,CU^2$). Dies trifft besonders für den Kondensator im Zentralgerät zu, wenn ein System mit nur wenigen Endstufen realisiert wird, da im Kondensator des Zentralgerätes die Energie speicherbar sein muß, damit man ein System mit der maximalen Ausbaustufe an Endstufen realisieren kann.

Elektronische Schaltungen, insbesondere in der Kraftfahrzeugtechnik, sind dem Einfluß der Migration (Wanderung metallischer Werkstoffe unter dem Einfluß der elektrischen Feldstärke) unterworfen, insbesondere dann, wenn sie einer gewissen Verschmutzung und dem Einfluß von Feuchtigkeit im flüssigen Zustand ausgesetzt sein können. Durch Migration kann die Isolierung zwischen benachbarten Leiterbahnen verschlechtert werden, und es kann in Extremfällen ein Kurzschluß oder eine Unterbrechung auftreten. Durch eine Lackierung der elektronischen Baugruppe kann zwar die Migration verringert werden, jedoch wird dadurch die Wiederverwertung und Entsorgung der elektronischen Baugruppe erschwert. Man ist deshalb bestrebt, ohne eine Lackierung auszukommen.

Der Erfindung liegt die Aufgabe zugrunde, eine Möglichkeit zu schaffen, den Einfluß der Migration zu verringern. An sich ist es bekannt, daß die Migration verringert werden kann, wenn die elektronischen Schaltungen hermetisch in einem Gehäuse abgedichtet werden. Dies ist jedoch aufwendig und erhöht das Gewicht, was im Kraftfahrzeugsektor unerwünscht ist.

Die genannte Aufgabe wird dadurch gelöst, daß die vom Energieversorgungsgerät gelieferte Betriebsspannung derart geregelt oder eingestellt wird, daß mindestens eine elektronische Baugruppe mit einer ausreichenden, möglichst kleinen Betriebsspannung versorgt wird bzw. im Zentralgerät nur eine Mindestenergie ($E = \frac{1}{2} CU^2$) zur Überbrückung der geforderten Autarkiezeit vorgehalten wird.

Ein Vorteil der Erfindung liegt darin, daß insbesondere bei Verwendung solcher Verbraucher oder elektronischen Baugruppen in einem System, die Kondensatoren mit relativ hoher Qualität (hierunter wird hier eine möglichst geringe Abweichung von der Nennkapazität und ein möglichst hoher Isolationswiderstand der Kondensatoren verstanden) aufweisen, die Betriebsspannung für diese elektronischen Einheiten gegenüber den Werten, wie sie bisher üblich sind, gesenkt werden kann. Durch diese Absenkung wird nämlich keine der elektronischen Einheiten funktionsunfähig, weil diese alle infolge des Vorhandenseins von Kondensatoren mit hoher Qualität auch mit einem gegenüber der Nennspannung abgesenkten Betriebsspannung funktionsfähig sind. Dieses gilt natürlich auch für den/die Kondensatoren im Zentralgerät, welche für die Energieversorgung im Autarkiefall erforderlich sind.

Unter einem anderen Aspekt löst die Erfindung die Aufgabe, die Lebensdauer von elektronischen Baueinheiten, insbesondere mit einem Elektrolyt-Kondensator, zu vergrößern und dies geschieht durch die erfindungsgemäße Lösung dadurch, daß wegen der verminderten Betriebsspannung, die in vielen Fällen gewählt werden kann, die Lebensdauer des Elektrolyt-Kondensators und somit der gesamten elektronischen Baugruppe ansteigt, wenn man annimmt, daß zahlreiche ausgelieferte Systeme Kondensatoren hoher Qualität aufweisen und der oben geschilderte schlechteste mögliche Fall eines Kondensators mit z.B. nur 50% der Nennkapazität nicht sehr häufig vorkommt. Nach der bisherigen Dimensionierung von Schaltungen mußte dieser schlechteste denkbare Fall allerdings stets angenommen werden.

Die Erfindung betrifft auch ein Energieversorgungsgerät, das die erfindungsgemäße Aufgabe ebenfalls löst.

Die Erfindung ermöglicht es somit, bei einem System mit einem Energieversorgungsgerät und mehreren elektronischen Baugruppen je nach Ausbaustufe (Anzahl der zu versorgenden elektronischen Baugruppen) bzw. je nach Energiebedarf des Systems die Spannung (Spannung als Funktion der tatsächlichen Kapazitätsgröße und der benötigten Energie) variabel der gegebenen Situation anzupassen. Dieses kann bei einem System bei Ausführungsformen der Erfindung durch softwaremäßiges Programmieren der Ausgangsspannung des Energieversorgungsgeräts erfolgen. Stattdessen ist im Einzelfall auch eine hardwaremäßige Beschaltung möglich, beispielsweise das Ein- oder Ausschalten von Teilen eines Spannungsteilers mittels von Hand zu betätigendem Umschalter oder durch Änderung der Schaltung mittels Löten.

Bei einer Ausführungsform der Erfindung, welche sich speziell als komplettes Zentralsystem ohne externe Endstufenmodule bzw. als Bussystem mit externen Endstufenmodulen realisieren läßt, ist ein softwaremäßiges Programmieren der Ausgangsspannung des Energieversorgungsgeräts möglich und zwar in Abhängigkeit von dem Ergebnis einer Messung oder Beurteilung der tatsächlich vorhandenen Kapazität sowie der tatsächlich benötigten Energie im System.

Bei einer Ausführungsform der Erfindung ist vorgesehen, daß das Gerät zur Versorgung mindestens einer elektronischen Baugruppe mit einer Betriebsspannung, wobei die mindestens eine elektronische Baugruppe jeweils einen eigenen Energiespeicher, vorzugsweise Kondensator, aufweist, eine Einrichtung zum Beurteilen der Qualität des Energiespeichers aufweist, und daß in Abhängigkeit von der ermittelten Qualität die vom Gerät gelieferte Betriebsspannung derart regelbar oder einstellbar ist, daß die elektronische Baugruppe, deren Energiespeicher die geringste Qualität aufweist, mit einer ausreichenden, möglichst kleinen Betriebsspannung versorgt wird. Ein Vorteil besteht darin, daß die abgegebene Betriebsspannung leicht auf den möglichen kleinsten Wert automatisch eingestellt werden kann.

Bei einer Ausführungsform der Erfindung ist die Einrichtung zum Beurteilen der Qualität des Energiespeichers derart ausgebildet, daß sie die Zufuhr der Betriebsspannung zu den angeschlossenen elektronischen Baugruppen unterbrechen kann und die Dauer der Betriebsfähigkeit der angeschlossenen elektronischen Baugruppen prüft, nachdem die Zufuhr der Betriebsspannung zu diesen unterbrochen wurde. Von Vorteil ist die einfache Art der Prüfung des Energiespeichers.

Bei Ausführungsformen der Erfindung weist das Gerät einen Gerät-Energiespeicher, vorzugsweise einen Kondensator, auf. Dabei kann vorteilhaft beim Gebrauch der Gerät-Energiespeicher auf eine oberhalb der abgegebenen Betriebsspannung liegende Spannung aufgeladen sein, und ein Spannungsabwärtswandler vorgesehen sein, um aus der Spannung des Gerät-Energiespeichers die abgegebene Betriebsspannung zu erzeugen. Dadurch kann im Gerät-Energiespeicher relativ viel Energie gespeichert werden.

Zur Erfindung gehört auch ein System, das ein Energieversorgungsgerät und mindestens eine elektronische Baugruppe, die beim Gebrauch von dem Gerät mit Betriebsspannung versorgt wird, aufweist.

Bei einer Ausführungsform des Systems ist vorgesehen, daß die Baugruppe derart ausgebildet ist, daß sie ein für ihre Betriebsfähigkeit charakteristisches Signal erzeugen kann, das durch das Gerät erkennbar ist.

Weitere Merkmale und Vorteile der Erfindung ergeben sich aus der nachfolgenden Beschreibung von Ausführungsbeispielen der Erfindung anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein. Es zeigen

Fig. 1   eine schematische Darstellung eines Energieversorgungsgeräts gemäß einer ersten Ausführungsform der Erfindung, bei dem durch Ändern einer Widerstandsbeschaltung die am Ausgang des Geräts gelieferte Betriebsspannung veranderbar ist,

Fig. 2   ein Energieversorgungsgerät gemäß einer zweiten Ausführungsform der Erfindung, bei dem die am Ausgang gelieferte Betriebsspannung durch elektronische Schaltereinrichtungen veränderbar ist, und von dem Gerät gespeiste Baugruppen,

Fig. 3   ein Energieversorgungsgerät gemäß einer dritten Ausführugsform der Erfindung, bei dem die Spannung am Autarkiekondensator durch elektronische Schaltereinrichtungen veränderbar ist, und von dem Gerät gespeiste Baugruppen.

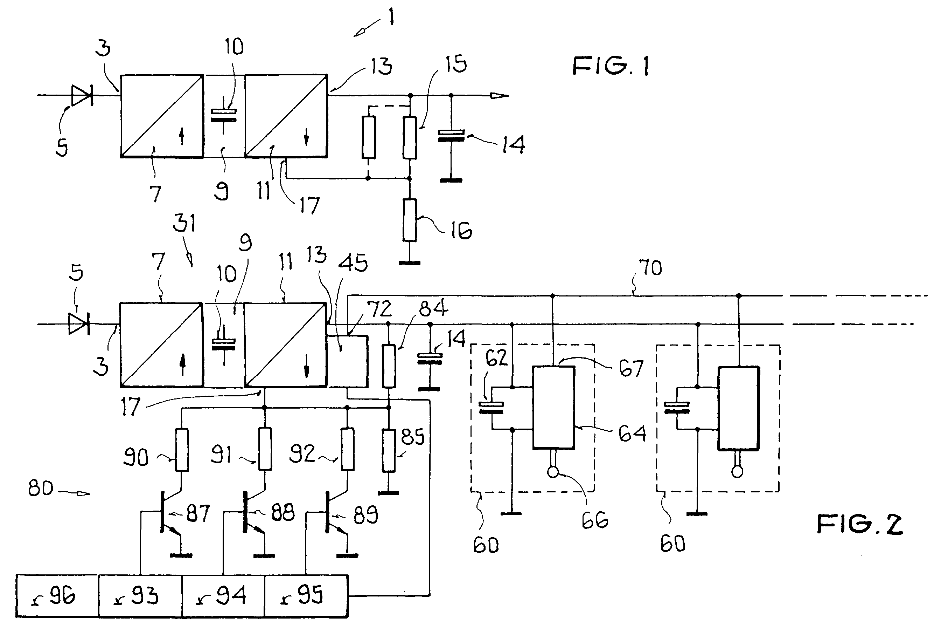

In Fig. 1 liegt ein mit Gleichspannung zu betreibendes Energieversorgungsgerät 1, das zum Einbau in ein Kraftfahrzeug vorgesehen ist, im Betrieb mit seinem Stromversorgungseingang 3 über eine als Verpolungsschutz dienende Diode 5 an einem Pol (z.B. Pluspol) der Kraftfahrzeugbatterie, die beispielsweise eine Nennspannung von 12 Volt liefert. Der Anschluß des Minuspols (Masse) ist nicht gezeigt. Das Gerät 1 weist einen Spannungsaufwärtswandler 7 auf, der die stark um die Nennspannung 12 Volt schwankende Gleichspannung der Kraftfahrzeugbatterie im Beispiel auf einen Wert von 60 Volt anhebt, mit dem eine Speichereinrichtung 9, die einen Elektrolyt-Kondensator 10 enthält, aufgeladen wird. Von der Speichereinrichtung 9 gelangt die elektrische Energie zu einem Spannungsabwärtswandler 11 und steht an dessen Ausgang 13 zur Speisung von Verbrauchern zur Verfügung. Der Anschluß 13 ist über einen weiteren Elektrolyt-Kondensator 14 zur Glättung und Beseitigung von rückwärts laufenden Störimpulsen mit Masse verbunden.

Der Ausgang 13 ist auch über einen Spannungsteiler aus Widerständen 15 und 16 mit Masse verbunden, und der Abgriff zwischen den Widerständen 15 und 16 ist einem Regeleingang 17 des Spannungsabwärtswandlers 11 zugeführt. Die in dem Spannungsabwärtswandlers 11 enthaltene Regelschaltung regelt die Ausgangsspannung am Ausgang 13, die die Betriebsspannung für anzuschließende Verbraucher bildet, so, daß am Verbindungspunkt der Widerstände 15 und 16 eine ganz bestimmte Spannung gegenüber Masse herrscht. Die Ausgangsspannung am Ausgang 13 kann dadurch geändert werden, daß das Spannungsteilerverhältnis geändert wird, im Beispiel kann dies in der angedeuteten Weise durch Hinzufügen von Widerständen parallel zum Widerstand 15 erfolgen. Hierbei kann ein weiterer Widerstand eingelötet werden, oder es kann auch mittels eines nicht gezeigten Schalters einer aus einer Mehrzahl anderer Widerstände parallel zum Widerstand 15 geschaltet werden.

Bei der Anordnung nach Fig. 2 ist ein anderes Energieversorgungsgerät 31 gezeigt, das wie auch in Fig. 1 die Komponenten 7, 9 und 11 aufweist. Dem Energieversorgungsgerät 31 ist noch eine Einrichtung 45 zum Prüfen und Steuern zugeordnet, die es gestattet, die Güte von Elektrolyt-Kondensatoren in angeschlossenen elektronischen Baugruppen 60 oder Verbrauchern festzustellen und in Abhängigkeit davon die abgegebene Betriebsspannung einzustellen.

Diese Baugruppen 60 sind mit einer am Ausgang des Spannungsabwärtswandler 41 angeschlossenen Leitung, die die Betriebsspannung von im Beispiel maximal 25 Volt den Baugruppen 60 zuführt, verbunden. Jeder Verbraucher enthält einen von der Betriebsspannung aufgeladenen Elektrolyt-Kondensator 62 sowie eine von der am Elektrolyt-Kondensator 62 anliegenden Spannung gespeiste elektronische Schaltung 64, die im Beispiel dazu dient, eine Zündpille 66 eines pyrotechnischen Gaserzeugers bei einem Unfall des Fahrzeugs zu zünden, um dadurch einen Airbag zum Schutz des Fahrers und ggf. anderer Insassen aufzublasen.

Die elektronische Schaltung 64 weist z. B. jeweils als Prüfsignalausgang einen Ausgang 67 auf, an den eine Leitung 70 angeschlossen ist, die einem einzigen Signaleingang 72 der Einrichtung 45 zugeführt ist. Die Anordnung ist so getroffen, daß jede elektronische Schaltung 64 auf dieser Leitung 70 ein Signal der Einrichtung 45 zuführt, das anzeigt, ob die elektronische Schaltung 64 noch von einer ausreichenden Spannung versorgt wird oder nicht. Wenn nur eine einzige elektronische Schaltung 64 über die Leitung 70 meldet, daß sie nicht mit ausreichender Betriebsspannung versorgt ist, so wird dies von der Einrichtung 45 erkannt.

Die Einrichtung 45 steuert das Spannungsteilerverhältnis einer elektronisch steuerbaren Spannungsteilervorrichtung 80, um in der unten geschilderten Weise zu Beginn einer Fahrt eine relativ hohe Betriebsspannung am Anschluß 13 zu erzeugen und diese anschließend, falls möglich, abzusenken.

Die Spannungsteilervorrichtung 80 weist einen zwischen den Anschluß 13 und Masse eingeschalteten Spannungsteiler mit Widerständen 84 und 85 auf. Der Verbindungspunkt der beiden Widerstände ist auch hier mit dem Regeleingang 17 verbunden. Durch steuerbare elektronische Schalterelemente, im Beispiel Transistoren 87, 88 und 89, können weitere Widerstände 90, 91 und 92 parallel zum Widerstand 85 geschaltet werden, wenn der zugeordnete Transistor leitend gesteuert wird. Die Steuerelektroden der Transistoren sind mit jeweils einer Stufe 93 bzw. 94 bzw. 95 eines Registers 96 verbunden. In das Register 96 kann durch die Einrichtung 45 eine Binärzahl im Bereich von 0 (dezimal) bis 7 (dezimal) geladen werden. Beim Wert 0 sind alle Transistoren 86 bis 88 gesperrt, durch eine binäre 1 in einer der Stufen wird der zugeordnete Transistor leitend. Somit ist das Spannungsteilerverhältnis der Spannungsteilervorrichtung 80 und daher die am Ausgang 13 gelieferte Betriebsspannung softwaremäßig einstellbar. Im Beispiel sind daher acht verschiedene Werte der Spannung am Ausgang 13 möglich.

Die Anordnung arbeitet in folgender Weise. Beim Beginn einer Fahrt (z.B. Drehen des Zündschlüssels) wird dem Eingang 3 die Netzspannung vom Gleichspannungsnetz des Kraftfahrzeugs zugeführt. Demgemäß erscheint kurze Zeit später am Ausgang 13 die maximale Betriebsspannung in Höhe von z.B. 25 Volt für die Baugruppen 60. Nach einer kurzen Zeit, die ausreicht, alle Elektrolyt-Kondensatoren 62 aufzuladen, wird die Spannung am Ausgang 13 durch die Einrichtung 45 abgeschaltet und es wird das Signal am Anschluß 72 überprüft, wann dort die Meldung erscheint, daß einer der angeschlossenen Verbraucher nicht über ausreichende Betriebsspannung verfügt. Die Zeitspanne, die bis dahin seit dem Abschalten der Spannung am Anschluß 13 verstrichen ist, ist eine Maß dafür, wie gut die Qualität (tatsächliche Kapazität in Kombination mit etwaigen Leckwiderständen) des schlechtesten Kondensators ist. Wenn die Qualität aller Kondensatoren etwa gleich gut ist und die Kondensatoren dem Nennwert der Kapazität entsprechen, so ist die genannte Zeitspanne verhältnismäßig groß, z.B. 500 msec. In diesem Fall sorgt die Einrichtung 45 dafür, daß anschließend dem Ausgang 13 eine geringere Ausgangsspannung zugeführt wird, und zwar genügt es (wenn die Anordnung zunächst so dimensioniert worden war, daß man für den schlechtesten anzunehmenden Fall nur noch mit 50% der Nennkapazität eines Kondensators rechnet), die Spannung um den Faktor 0,7 abzusenken, so daß nur noch die halbe Energiemenge verglichen mit der vollen Betriebsspannung in den einzelnen Kondensatoren 62 gespeichert wird, und daher nach einem Unfall die Stromversorgung der einzelnen Verbraucher noch für den geforderten Zeitraum von im Beispiel 250 msec gewährleistet ist. Wegen der dadurch verringerten Betriebsspannung (im Beispiel 25 V x 0,7 = 17,5 V) der einzelnen Baugruppen 60 werden dort Erscheinungen, die die Lebensdauer vermindern, nämlich Schäden an den Kondensatoren und/oder Migration, verringert.

Wenn dagegen die oben genannte Zeitspanne nur 250 msec beträgt, so ist das ein Hinweis dafür, daß mindestens ein Kondensator nur eine Kapazität in Höhe der halben Nennkapazität hat. In diesem Fall wird die Betriebsspannung nicht verringert und bleibt auf 25 V.

Beträgt die Zeitspanne z.B. 350 msec, so wird entsprechend die Betriebsspannung auf einen Wert verringert, der kleiner ist als 25 V, aber größer als 17,5 V und so bemessen ist, daß für den Verbraucher mit dem schlechtesten Kondensator dieser 250 msec lang den Verbraucher mit Energie versorgen kann. Die genannten Zahlenwerte sind selbstverständlich nur Beispiele und können bei Bedarf anders gewählt werden.

Das auf die Leitung 70 gegebene Signal wird im Beispiel in folgender Weise erzeugt: Eine ausreichende Spannung wird dadurch signalisiert, daß die einzelne Elektronik 64 hochohmig eine positive Gleichspannung an die Leitung 70 anlegt. Dagegen legt eine Elektronik 64, die nicht über ausreichend Spannung verfügt, die Leitung 70 niederohmig an Masse, so daß dieses zuletzt genannte Signal, und zwar das zeitlich zuerst auftretende derartige Signal, das am Anschluß 72 erkannte Signal ist. Dieses Signal kennzeichnet den schlechtesten Kondensator, es kennzeichnet nicht einen Mittelwert aller Kondensatoren.

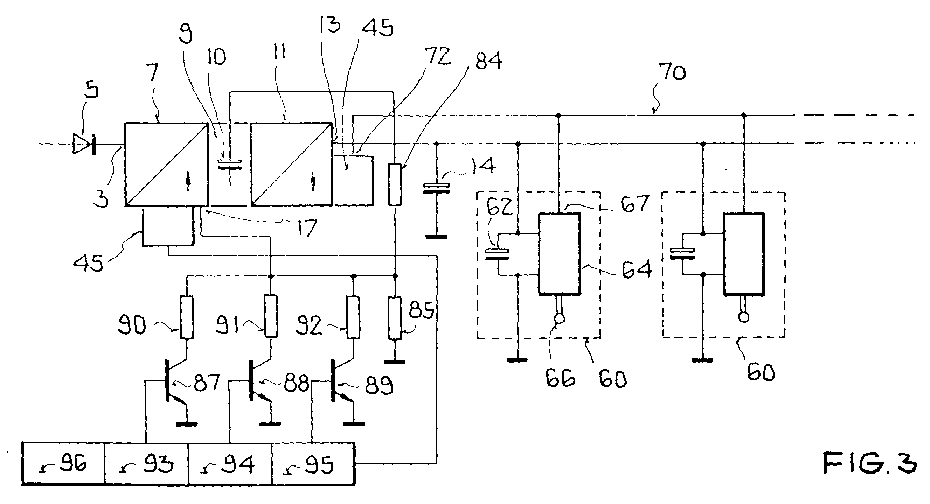

Figur 3 zeigt eine dritte Ausführungsform, bei der im Gegensatz zu Figur 2 nicht die am Ausgang des Abwärtswandlers 11 gelieferte Betriebsspannung regelbar ist, sondern die Spannung am Autarkiekondensator 10 bzw. die Spannung am Ausgang des Aufwärtswandlers 7 regelbar ist und an die tatsächlich benötigte Energie angepaßt wird. Diese Regelung erfolgt wie in Figur 2 bereits beschrieben. Jedoch wird als Eingangssignal für diese Regelung die Spannung des Autarkiekondensators 10 verwendet und das resultierende Ausgangssignal der Regelung dem Aufwärtswandler 7 zugeführt, der dann den Autarkiekondensator 10 mit einem an die Anforderungen angepaßten Signal versorgt. Bei einer solchen Anordnung wird letztendlich auch die vom Gerät gelieferte Betriebsspannung geregelt. Dies geschieht im dargestellten Fall nicht direkt über den Abwärtswandler 11, wie in Figur 2 beschrieben, sondern indirekt über den Aufwärtswandler 7, der sich am Geräteeingang befindet und der die am Ausgang anliegende Betriebsspannung mitbeeinflußt bzw. über den Autarkiekondensator 10. Auch hier findet eine Regelung statt, die in Abhängigkeit vom tatsächlichen Energiebedarf, die optimierte Betriebsspannung einstellt.

**Patentansprüche**

1. Verfahren zum Betreiben eines Energieversorgungsgeräts, welches zur Versorgung mindestens einer elektronischen Baugruppe mit einer Betriebsspannung geeignet ist, dadurch gekennzeichnet, daß die vom Energieversorgungsgerät gelieferte Betriebsspannung derart geregelt oder eingestellt wird, daß mindestens eine elektronische Baugruppe mit einer ausreichenden, möglichst kleinen Betriebsspannung versorgt wird.

2. Energieversorgungsgerät, welches zur Versorgung mindestens einer elektronischen Baugruppe mit einer Betriebsspannung geeignet ist, dadurch gekennzeichnet, daß die vom Energieversorgungsgerät (1, 31) gelieferte Betriebsspannung derart regelbar oder einstellbar ist, daß mindestens eine elektronische Baugruppe (60) mit einer ausreichenden, möglichst kleinen Betriebsspannung versorgt wird.

3. Gerät nach Anspruch 2, welches zur Versorgung mindestens einer elektronischen Baugruppe (60) mit einer Betriebsspannung geeignet ist, wobei die mindestens eine elektronische Baugruppe (60) jeweils einen eigenen Energiespeicher, vorzugsweise Kondensator (62), aufweist, dadurch gekennzeichnet, daß das Gerät (31) eine Einrichtung (45) zum Beurteilen der Qualität des Energiespeichers aufweist, und daß in Abhängigkeit von der ermittelten Qualität die vom Gerät gelieferte Betriebsspannung derart regelbar oder einstellbar ist, daß die elektronische Baugruppe, deren Energiespeicher die geringste Qualität aufweist, mit einer ausreichenden, möglichst kleinen Betriebsspannung versorgt wird.

4. Gerät nach Anspruch 3, dadurch gekennzeichnet, daß die Einrichtung (45) zum Beurteilen der Qualität des Energiespeichers derart ausgebildet ist, daß sie die Zufuhr der Betriebsspannung zu den angeschlossenen elektronischen Baugruppen (60) unterbrechen kann und die Dauer der Betriebsfähigkeit der angeschlossenen elektronischen Baugruppen (60) prüft, nachdem die Zufuhr der Betriebsspannung zu diesen unterbrochen wurde.

5. Gerät nach einem der Ansprüche 2 bis 4, dadurch gekennzeichnet, daß die abgegebene Betriebsspannung mittels einer elektronischen Steuerung veränderbar ist.

6. Gerät nach einem der Ansprüche 2 bis 5, dadurch gekennzeichnet, daß es einen Gerät-Energiespeicher, vorzugsweise einen Kondensator (10), aufweist.

7. Gerät nach einem der Ansprüche 2 bis 6, dadurch gekennzeichnet, daß beim Gebrauch der Gerät-Energiespeicher auf eine oberhalb der abgegebenen Betriebsspannung liegende Spannung aufgeladen ist, und daß ein Spannungsabwärtswandler (11) vorgesehen ist, um aus der Spannung des GerätEnergiespeichers die abgegebene Betriebsspannung zu erzeugen.

8. System mit einem Energieversorgungsgerät nach einem der Ansprüche 2 bis 7 und mindestens einer elektronischen Baugruppe (60), die beim Gebrauch von dem Gerät mit Betriebsspannung versorgt wird.

9. System nach Anspruch 8 mit einem Energieversorgungsgerät nach Anspruch 4, und elektronische Baugruppe (60) zur Verwendung in dem System, dadurch gekennzeichnet, daß die Baugruppe (60) derart ausgebildet ist, daß sie ein für ihre Betriebsfähigkeit charakteristisches Signal erzeugen kann, das durch das Gerät (31) erkennbar ist.

FIG.1

FIG.2

EP 0 872 940 A2

FIG.3